# EUROPÄISCHE PATENTSCHRIFT

(11) **EP 3 775 434 B1**
(45) Veröffentlichungstag und Bekanntmachung des Hinweises auf die Patenterteilung: **14.06.2023**
(21) Anmeldenummer: 19717441.0
(22) Anmeldetag: 02.04.2019
(51) Int. Cl.: E04G 21/04, F16L 3/127, B66C 23/64

(54) **AUSLEGERARM MIT INNEN LIEGENDER ROHRHALTERVERSCHRAUBUNG**
BOOM WITH AN INTERNAL SCREW FASTENING FOR A PIPE RETAINER
BRAS AVEC UNE FIXATION PAR VIS INTERNE POUR UN SUPPORT DE CONDUIT

(30) Priorität: 04.04.2018 DE 102018107933
(43) Veröffentlichungstag der Anmeldung: 17.02.2021
(73) Patentinhaber: Putzmeister Engineering GmbH, 72631 Aichtal (DE)
(72) Erfinder: MÜLLER, Ansgar, 70184 Stuttgart (DE); HÄFNER, Jens, 70599 Stuttgart (DE); BENZ, Andreas, 73240 Wendlingen (DE); PFEIFFENBERGER, Kai, 70794 Filderstadt (DE); KASTEN, Knut, 73760 Ostfildern (DE)
(74) Vertreter: Glawe, Delfs, Moll
(86) Internationale Anmeldenummer: PCT/EP2019/058321
(87) Internationale Veröffentlichungsnummer: WO 2019/193016

(56) Entgegenhaltungen:
- CN-U- 201 857 758
- CN-U- 202 689 570
- US-A1- 2010 230 371

## Beschreibung

Die Erfindung betrifft einen Auslegerarm, insbesondere für den Verteilermast einer Betonpumpe, einen Verteilermast mit wenigstens zwei Auslegerarmen, eine Betonpumpe mit einem Verteilermast umfassend wenigstens zwei Auslegerarme sowie ein Verfahren zur Herstellung eines Auslegerarms.

Betonpumpen verfügen regelmäßig über einen auf einem, häufig fahrbaren Unterbau angeordneten Ausleger mit einer daran entlanggeführten Förderleitung, durch die fließfähiger Frischbeton gepumpt werden kann. Der Ausleger umfasst dabei mehrere Auslegerarme, die um Achsen jeweils quer zur Längsrichtung des Auslegerarms relativ zueinander verschwenkt werden können. Der Ausleger lässt sich dadurch einerseits kompakt zusammenzulegen, andererseits kann der Ausleger im ausgefahrenen Zustand große Höhen erreichen und/oder seitlich durch beengte Öffnungen oder in begrenzten Räumen geführt werden. Dazu werden die einzelnen Auslegerarme jeweils relativ zueinander verschwenkt, wobei sich zusätzlich der gesamte Ausleger um eine senkrechte Achse gegenüber dem Unterbau drehen lässt.

Die Förderleitung ist über Rohrhalter an den einzelnen Auslegerarmen befestigt und weist im Bereich der Schwenkachsen zwischen zwei Auslegerarmen jeweils eine Drehkupplung auf. Damit die Förderleitung die Schwenkbewegung der Auslegerarme nicht behindert, ist es erforderlich, dass die Drehkupplung jeweils koaxial mit der dazugehörigen Schwenkachse angeordnet ist. Um dies zu erreichen, müssen die Rohrhalter für die Förderleitung genau positioniert sein.

Im Stand der Technik ist es bekannt, aus Stahl gefertigten Auslegerarmen die Rohrhalter unmittelbar in das Profil des Auslegerarms einzuschweißen. Für eine exakte Positionierung der Rohrhalter sind aufgrund der bei Auslegerarmen üblichen großen Fertigungstoleranzen regelmäßig arbeitsaufwendige Anpassungen am Auslegerarm oder dem Rohrhalter erforderlich. Dies gilt sowohl für die Erstmontage eines Rohrhalters als auch für den Austausch eines evtl. defekten Rohrhalters.

Aus der EP 2 836 659 B1 ist ein Verfahren zur Befestigung eines Rohrhalters bekannt, bei der im Befestigungsbereich für einen Rohrhalter zunächst ein Adapterelement an dem Auslegerarm, bspw. durch Schweißen, angebracht wird und erst anschließend in dieses Adapterelement Schraubenlöcher zur Befestigung eines Rohrhalters daran eingebracht werden. Indem die Schraubenlöcher erst eingebracht werden, nachdem die Adapterplatte am Auslegerarm befestigt ist, lassen sich die Schraubenlöcher und damit der daran zu befestigende Rohrhalter gegenüber der Schwenkachse des Auslegerarms genau positionieren. Diese Lösung ist gegenüber dem älteren Stand der Technik deutlich kostengünstiger und montagefreundlicher. Auch ist sie zuverlässig.

Unter einigen ungewöhnlichen und extremen Belastungen hat sich jedoch gezeigt, dass die Belastbarkeit der Konstruktion aus EP 2 836 659 B1 zu klein sein kann, sodass es in der Folge zu Brüchen der Schrauben, mit denen der Rohrhalter an dem Adapterelement befestigt ist und die letztendlich eine Sollbruchstelle darstellen, kommt. Je nachdem, an welcher Stelle die Schrauben brechen, kann es schwierig sein, diese einfach zu ersetzen, da Gewindereste der gebrochenen Schrauben in den Schraubenlöchern des Adapterelementes verbleiben können.

Ein vergleichbares Problem kann auch bei aus Auslegerarmen aus Faserverbundwerkstoff, in den metallene Anschlussplatten mit Schraubenlöchern integriert sind, um daran Rohrhalter anzuschrauben.

CN 201 857 758 U offenbart einen Auslegerarm mit einem Halteelement.

Der Erfindung liegt die Aufgabe zugrunde, einen Auslegerarm, einen Verteilmast, eine Betonpumpe sowie ein Verfahren zur Herstellung eines Auslegerarms zu schaffen, bei dem die Nachteile aus dem Stand der Technik nicht mehr oder nur noch in vermindertem Umfang auftreten.

Gelöst wird diese Aufgabe durch einen Auslegerarm gemäß Hauptanspruch, einen Verteilermast gemäß Anspruch 10, eine Betonpumpe gemäß Anspruch 11 sowie ein Verfahren gemäß Anspruch 12. Vorteilhafte Weiterbildungen sind Gegenstand der abhängigen Ansprüche.

Demnach betrifft die Erfindung einen Auslegerarm, insbesondere für den Verteilermast einer Betonpumpe, mit einem ersten und einem zweiten Ende, wobei zumindest an einem Ende des Auslegerarms ein Drehgelenk mit einer Gelenkachse und an einer gegenüber der Gelenkachse definierten Position ein aus dem Auslegerarm hervorstehendes Halteelement vorgesehen ist, wobei zur Befestigung des Halteelementes am Auslegerarm eine den Auslegerarm vollständig durchdringende einseitig geschlossene Hülse vorgesehen ist, deren Flanschfläche eine Durchgangsbohrung aufweist, an der das Halteelement mit einer durch das offene Ende der Hülse eingeführten Befestigungselement befestigt ist.

Weiterhin betrifft die Erfindung einen Verteilermast umfassend wenigstens zwei Auslegerarme sowie eine Betonpumpe mit einem auf einem Unterbau angeordneten Verteilermast umfassend wenigstens zwei Auslegerarme, wobei von den Auslegerarmen jeweils wenigstens einer erfindungsgemäß ausgestaltet ist.

Auch betrifft die Erfindung ein Verfahren zur Herstellung eines Auslegerarms, insbesondere für den Verteilermast einer Betonpumpe, mit einem ersten und einem zweiten Ende, wobei zumindest an einem Ende des Auslegerarms ein Drehgelenk mit einer Gelenkachse vorgesehen ist, umfassend die Schritte:
- Einbringen einer einseitig geschlossenen Hülse in den Auslegerarm, sodass diese den Auslegerarm vollständig durchdringt; und
- Befestigen eines Halteelementes an einer Durchgangsbohrung an der Flanschfläche der Hülse mit einem durch das offene Ende der Hülse eingeführten Befestigungselement befestigt wird.

"Einseitig geschlossene Hülse" bedeutet in Zusammenhang mit der Erfindung eine Hülse, an deren einer Stirnseite eine Flanschfläche die Öffnung der Hülse wenigstens teilweise verschließt. Die Hülse kann abseits der erfindungsgemäß vorgesehenen Durchgangsbohrung vollständig geschlossen sein. Es ist aber auch möglich, dass Abseits der Durchgangsbohrung noch weitere Öffnungen vorgesehen sind, bspw. um ein Ansammeln von Wasser in der Hülse zu vermeiden.

Die Hülse kann rohrförmig mit einem kreisrunden Querschnitt ausgeführt sein. Es sind aber auch beliebige andere Querschnitte, wie bspw. ein rechteckiger oder quadratischer Querschnitt, möglich.

Der erfindungsgemäße Auslegerarm zeichnet sich dadurch aus, dass die Befestigung eines Halteelements, bspw. eines Rohrhalters, an einer außen liegenden Flanschfläche erfolgt, deren Rückseite - da Teil einer den Auslegerarm vollständig durchdringenden Hülse - zugänglich ist, sodass die Befestigung des Halteelements über ein durch das offene Ende der Hülse eingeführtes Befestigungselement erfolgen kann. Bei dem Befestigungselement kann es sich bspw. um eine Schraube oder einen Bolzen handeln, die bzw. der durch die Durchgangsbohrung in der Flanschfläche geführt ist und in ein geeignetes Innengewinde im Halteelement eingreift. Alternativ kann das Halteelement bspw. auch einen Gewindestiftabschnitt aufweisen, der durch die Durchgangsbohrung geführt ist, wobei das Befestigungselement dann eine Mutter ist.

Auch hier ist das Befestigungselement die letztendliche Sollbruchstelle bei statischer Überlast. Kommt es aber zu einem Bruch, sind aber zumindest an dem Auslegerarm selbst bzw. der Flanschfläche aufgrund der dort lediglich vorgesehenen Durchgangsbohrung keine schwer zu entfernenden Gewindereste zu erwarten, sodass das Befestigungselement leicht ersetzt werden kann. Sollte das Halteelement nicht unmittelbar weiter verwendet werden können, bspw. weil Gewindereste im Halteelement verbleiben und nicht unproblematisch entfernt werden können oder ein evtl. Gewindestiftabschnitt am Halteelement beschädigt ist, kann an dessen Stelle problemlos wenigstens zeitweise ein Ersatz-Halteelement verwendet werden, um das Halteelement gesondert wieder instand zu setzen. Die Ausfallzeit der den Auslegerarm umfassenden Betonpumpe ist dadurch auf ein Minimum reduziert.

Insbesondere wenn der Anschlussbereich des Halteelements zentral angeordnet ist, ist der Kraftfluss vom Halteelement in den Auslegerarm gegenüber Ausführungsformen, bei denen das Halteelement über einen Flansch o. ä. mit dem Auslegerarm verschraubt ist, verbessert. Die Befestigung erfolgt dann nämlich nahe oder näherungsweise in der neutralen Faser des Halteelements, sodass der Befestigungsbereich weniger schwingenden Zugbelastungen aufgrund einer wechselnden Biegebelastung des Halteelements ausgesetzt ist. Das Risiko des Schwingungsversagens des Befestigungselementes ist somit reduziert.

Insbesondere wenn das Halteelement mit einem einzelnen Befestigungselement an dem Auslegerarm befestigt ist, ist bevorzugt, wenn die Flanschfläche auf der dem Halteelement zugewandten Seite zum Formschluss mit dem Haltelement ausgebildet ist. Durch einen entsprechenden Formschluss wird - selbst wenn die Position des Halteelementes durch einen an die Befestigungsschraube angepassten Durchmesser des Durchgangsloches ausreichend festgelegt sein sollte - zumindest eine Verdrehsicherung des Halteelements gegenüber dem Auslegerarm erreicht. Ist die Position des Halteelementes gegenüber dem Auslegerarm allein durch die Befestigung am Durchgangsloch nicht ausreichend genau festgelegt, kann dies durch den Formschluss mit der Flanschfläche erreicht werden. Der Formschluss kann über ein oder mehrere Sacklöcher in der Flanschfläche, in denen fest an dem Halteelement angeordnete Vorsprünge oder in dort ebenfalls vorgesehenen Sacklöcher eingeführte Pins erreicht werden. Auch können Nuten oder Vorsprünge auf der Flanschfläche vorgesehen sein, die mit entsprechenden Pendants an dem Halteelement zusammenwirken.

Alternativ oder zusätzlich ist es möglich, wenn die Flanschfläche wenigstens eine weitere Durchgangsbohrung aufweist, durch die jeweils ein durch die Hülse eingeführtes und in ein Innengewinde am Halteelement eingreifendes Befestigungselement geführt ist. Auch hierdurch wird eine Verdrehsicherung für das Halteelement erreicht. Aus Gründen des optimalen Kraftflusses ist es dabei bevorzugt, wenn selbst bei mehr als einem Befestigungselement eines davon weiterhin zentral am Halteelement angreift.

Ist der Auslegerarm aus Faserverbundmaterial, kann aufgrund der dabei erreichbaren Fertigungsgenauigkeiten die einseitig geschlossene Hülse als Fertigbauteil mit, vorzugsweise zentrischem, Durchgangsloch ausgestaltet sein, die bei dessen Herstellung in den Auslegerarm integriert wird. Aufgrund der Fertigungsgenauigkeiten lässt sich das Durchgangsloch ausreichend genau in Relation zu der vorgesehenen Schwenkachse positionieren, sodass eine Nachbearbeitung regelmäßig nicht erforderlich ist.

Handelt es sich bei dem Auslegerarm um ein geschweißtes Stahlbauteil, bestehen im Regelfall jedoch erhebliche Fertigungstoleranzen. In diesem Fall ist bevorzugt, wenn die einseitig geschlossene Hülse im Auslegerarm befestigt wird und erst nach Befestigung der Hülse im Auslegerarm das Durchgangsloch in der festgelegten Position gegenüber der Gelenkachse eingebracht wird. Dadurch kann eine exakte Positionierung des Halteelementes gegenüber der Schwenkachse erreicht werden. Das Einbringen von einem oder mehreren Durchgangslöchern nach bereits erfolgter Befestigung im Auslegerarm lässt sich am fertigen Auslegerarm aus Stahl praktisch zweifelsfrei erkennen, wenn im Falle einer einzelnen Durchgangsbohrung diese nicht zentrisch oder bei einem Muster an Durchgangsbohrungen das Muster nicht zentrisch zu der Hülse angeordnet ist.

Alternativ dazu ist es möglich, den Durchmesser der Durchgangsbohrung derart groß zu wählen, dass das Halteelement in verschiedenen Position am Auslegerarm befestigt werden kann, die Position des Halteelementes also insbesondere nicht über die Position der Durchgangsbohrung festgelegt wird. Die Hülse kann dann trotz der zu erwartenden Fertigungstoleranzen mit bereits vorgesehenem Durchgangloch bei der Herstellung in einen Auslegerarm als Stahlbauteil integriert werden. Die letztendliche Position des Halteelementes am Auslegerarm kann dann bspw. über eine, vorzugsweise erst nach Fertigstellung des Auslegerarms erfolgende Bearbeitung der Flanschfläche der Hülse zum Formschluss mit dem Halteelement erfolgen.

Die Hülse kann einstückig ausgeformt sein. Es ist aber bevorzugt, wenn die einseitig geschlossene Hülse eine Durchgangshülse mit daran unlösbar angefügtem, die Flanschfläche bildendem Flanschelement ist. Das Flanschelement kann dabei insbesondere ein Drehteil sein. Durch eine entsprechende Ausgestaltung der Hülse kann eine kostengünstige Herstellung erreicht werden. Insbesondere wenn die Hülse ein Fertigbauteil mit Durchgangsloch ist - bspw. weil sie in einen Auslegerarm aus Faserverbundmaterial integriert werden soll - kann das Flanschelement optimal an den zu erwartenden Kraftfluss angepasst werden.

Der Auslegerarm weist vorzugsweise ein Kastenprofil auf. In diesem verbindet die Hülse zwei gegenüberliegende Profilwände und kann das Kastenprofil bei geeigneter Verbindung mit den genannten Wänden versteifen.

Bei dem Halteelement handelt es sich vorzugsweise um einen Rohrhalter, insbesondere für eine Förderleitung für fließfähigen Frischbeton.

Es ist bevorzugt, wenn das von dem Flanschelement entfernte Ende der Hülse wahlweise mit einem Rohrdeckel verschlossen ist, um das bzw. die in der Hülse angeordneten Befestigungselement(e) vor äußeren Einflüssen zu schützen. Ist ein Zugang zu dem oder den Befestigungselement(en) erforderlich, kann der Rohrdeckel problemlos zeitweise entfernt werden.

Zur Erläuterung des erfindungsgemäßen Verteilmastes sowie der erfindungsgemäßen Betonpumpe wird auf die vorstehenden Ausführungen verwiesen. Bei der Betonpumpe handelt es sich vorzugsweise um eine fahrbare Betonpumpe, d. h. der Unterbau der Betonpumpe ist fahrbar ausgestaltet.

Auch zur Erläuterung des erfindungsgemäßen Verfahrens wird auf die vorstehenden Ausführungen verwiesen.

Die Erfindung wird nun anhand vorteilhafter Ausführungsformen unter Bezugnahme auf die beigefügten Zeichnungen beispielhaft beschrieben. Es zeigen:
- Figur 1:: eine erfindungsgemäße Betonpumpe mit erfindungsgemäßen Verteilermast umfassend einen erfindungsgemäßen Auslegerarm;
- Figur 2:: eine schematische Schnittdarstellung eines ersten Ausführungsbeispiels eines erfindungsgemäßen Auslegerarms;
- Figur 3:: eine schematische Schnittdarstellung eines zweiten Ausführungsbeispiels eines erfindungsgemäßen Auslegerarms;
- Figur 4:: eine schematische Schnittdarstellung eines dritten Ausführungsbeispiels eines erfindungsgemäßen Auslegerarms;
- Figur 5:: eine schematische Schnittdarstellung eines vierten Ausführungsbeispiels eines erfindungsgemäßen Auslegerarms;
- Figur 6:: eine schematische Schnittdarstellung eines fünften Ausführungsbeispiels eines erfindungsgemäßen Auslegerarms; und
- Figur 7:: eine schematische Schnittdarstellung eines sechsten Ausführungsbeispiels eines erfindungsgemäßen Auslegerarms.

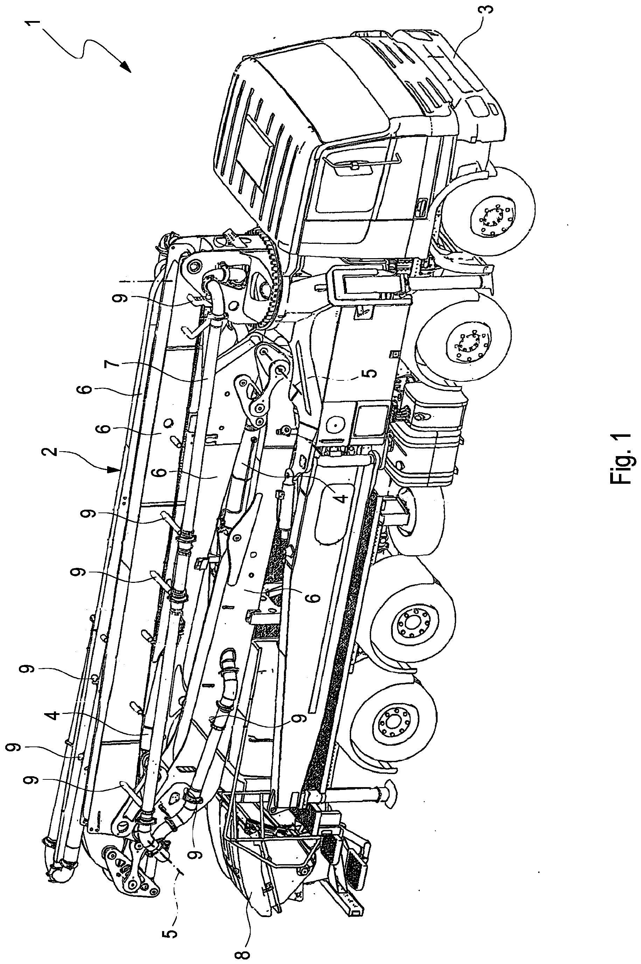

Bei der in Figur 1 dargestellten mobilen Betonpumpe 1 mit Verteilermast 2 handelt es sich um eine Autobetonpumpe, bei dem der Verteilermast 2 auf einem fahrbaren Unterbau 3 befestigt ist. Der Verteilermast 2 umfasst mehrere, durch Hydraulikzylinder 4 um Gelenkachsen 5 verschwenkbare Auslegerarme 6, an denen eine Förderleitung 7 für fließfähigen Beton entlang geführt ist. Mit Hilfe einer am Unterbau 3 angeordneten Betonpumpe kann fließfähiger Beton vom Aufgabetrichter 8 durch die Förderleitung 7 mit zum freien offenen Ende der Förderleitung 7 gefördert werden. Die Förderleitung 7 ist über Halteelemente 9, genauer Rohrhalter derart an den Auslegerarmen 6 befestigt, dass in der Förderleitung 7 vorgesehene Drehkupplungen auf den Gelenkachsen 5, sodass die Förderleitung 7 die Schwenkbewegung der Auslegerarme 6 relativ zueinander nicht behindert.

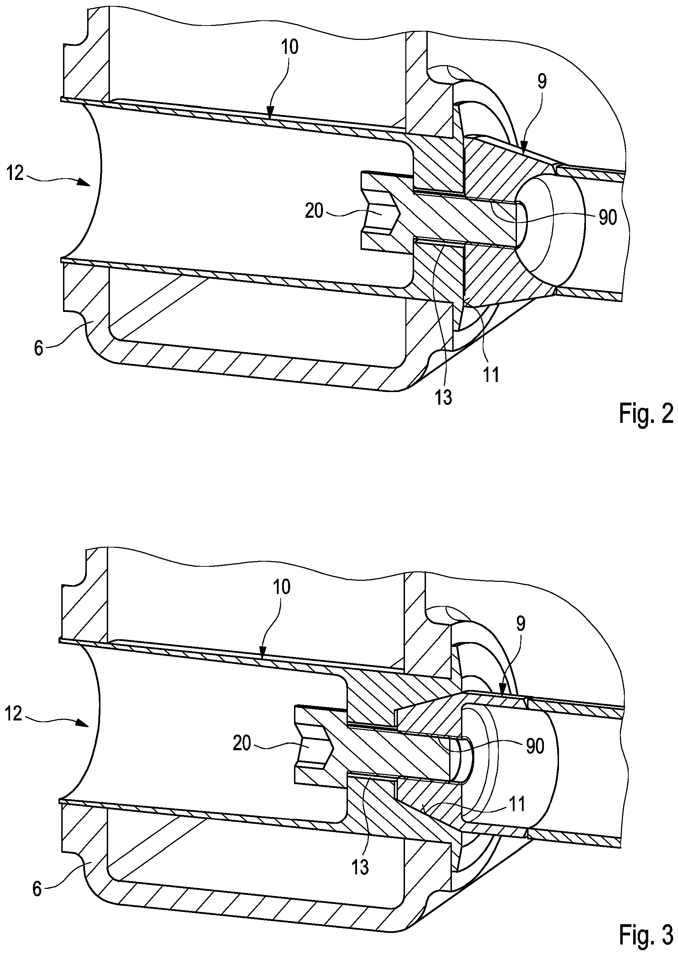

In den Figuren 2 bis 6 sind verschiedene, erfindungsgemäße Ausgestaltungen der Anbindung der Halteelemente 9 an einen Auslegerarm 6 in einer Schnittansicht gezeigt. Sämtliche Ausgestaltungen basieren auf dem gleichen Grundprinzip, welches nachfolgend allgemein erläutert wird, bevor anschließend auf die spezifischen Eigenschaften der einzelnen Ausgestaltungen eingegangen wird.

Zur Befestigung des Halteelements 9 am Auslegerarm 6 weist dieser eine einseitig geschlossene Hülse 10 auf, die den Auslegerarm 6 vollständig durchdringt, sodass die Flanschfläche 11 der Hülse 10 an der Außenseite einer der Seitenwände des Auslegerarms 6 liegt, während das von der Flanschfläche 11 entfernte, offene Ende 12 der Hülse 10 an der gegenüberliegenden Seitenwand des Auslegerarms 6 zugänglich ist.

In der Flanschfläche 11 ist eine Durchgangsbohrung 13 vorgesehen, die zentrisch auf der Flanschfläche 11 angeordnet ist. Als Befestigungselement 20 ist eine Schraube vorgesehen. Die Schraube 20, die über das von der Flanschfläche 11 entfernte Ende 12 der Hülse 10 und durch die Hülse 10 selbst in die Durchgangsbohrung 13 eingeführt ist, greift in ein Innengewinde 90 an dem (nur teilweise dargestellten) Halteelement 9 ein. Das Halteelement 9 ist so mithilfe der Schraube 20 fest mit der Hülse 10 und damit mit dem Auslegerarm 6 verbunden.

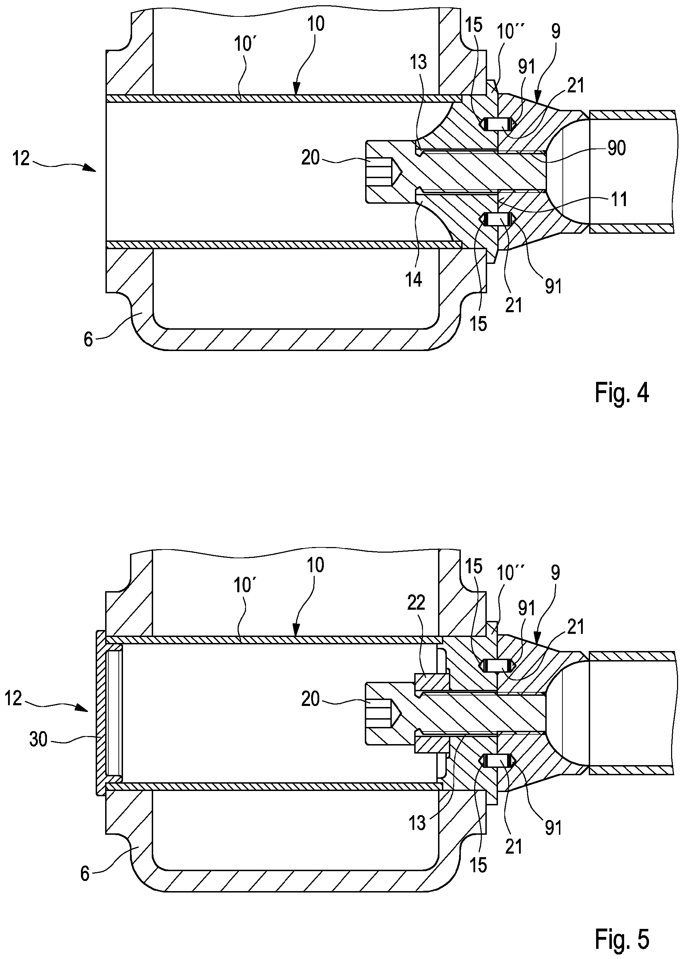

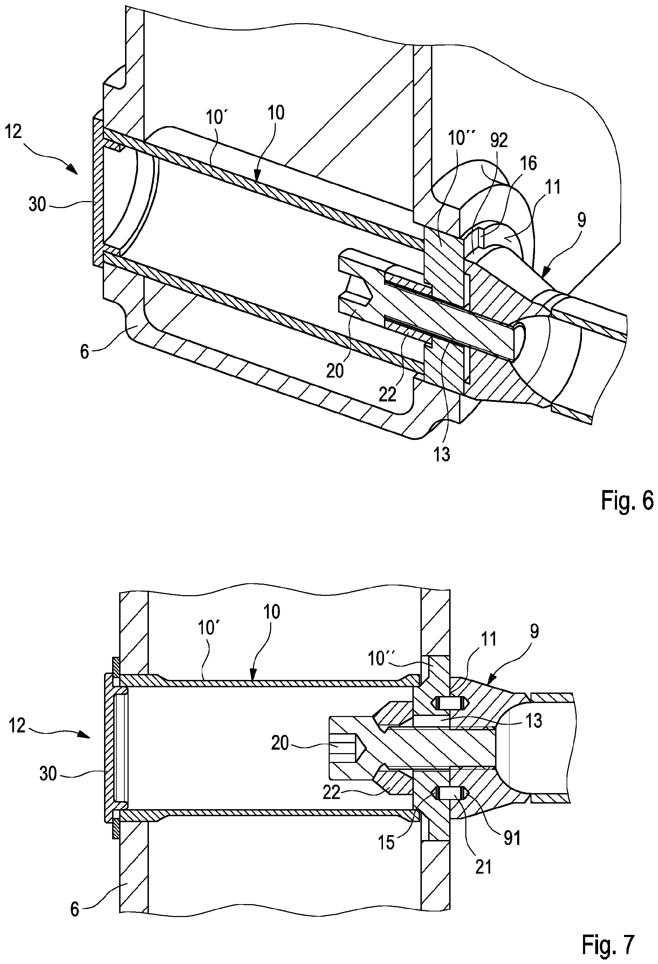

In Figur 2 ist die Hülse 10 einstückig ausgeführt. Handelt es sich bei dem dort gezeigten Auslegerarm 6 um einen aus Faserverbundwerkstoff, kann die Hülse 10 als Fertigteil inkl. der zentrischen Durchgangsbohrung 13 vorgefertigt sein, wie dies nachfolgend noch in Zusammenhang mit Figuren 3 und 4 erläutert wird. Ist der Auslegerarm 6 aus Stahl gefertigt, bietet es sich an, die Durchgangsbohrung, wird in Zusammenhang mit Figuren 5 und 6 noch näher erläutert, erst nach der Befestigung der Hülse 10 im Auslegerarm 6 vorzusehen. Auch bei dieser Vorgehensweise ist es grundsätzlich möglich, dass die Durchgangsbohrung 13, wie in Figur 2 dargestellt, zentrisch auf der Flanschfläche 11 liegt - aufgrund der großen Fertigungstoleranzen bei Auslegerarmen 6 aus Stahl ist dies aber grundsätzlich die Ausnahme.

Der Auslegerarm 6 in Figur 3 ist aus Faserverbundwerkstoff gefertigt. Bei dieser Bauart lässt sich die Hülse 10 sehr exakt gegenüber den Gelenkachsen 5 eines Auslegerarms 6 (vgl. Figur 1) positionieren. In der Folge kann die Hülse 10 auch als Fertigteil ausgeführt sein, bei der die Durchgangsbohrung 13 bereits vor der Integration der Hülse 10 in den Auslegerarm 6 vorgesehen ist. Bei der Ausführungsform gemäß Figur 3 ist die Durchgangsbohrung 13 darüber hinaus noch am Boden einer kegelstumpfförmigen Vertiefung der Flanschfläche 11 angeordnet, an welche die Formgebung des Halteelementes 9 angepasst ist. Über das Anziehen der Schraube 20 kommt es zu einer Kegelpressverbindung zwischen Halteelement 9 und Hülse 10. Über diese Verbindung lässt sich dann eine koaxiale Ausrichtung des Halteelements 9 mit der Hülse 10 sicherstellen. Gleichzeitig ergibt sich aufgrund der vergrößerten Kontaktfläche zwischen Halteelement 9 und Hülse 10 sowie des Pressens ein guter Reibschluss zwischen den beiden Elementen, der eine Verdrehsicherung bedeutet.

Auch der Auslegerarm 6 in Figur 4 ist aus Faserverbundwerkstoff, weshalb es sich auch bei der dort gezeigten Hülse 10 um ein Fertigteil handelt, bei der die Durchgangsbohrung 13 bereits geschaffen war, bevor die Hülse 10 in den Auslegerarm 6 integriert wurde. Die Hülse 10 ist dabei jedoch nicht einstückig (vgl. Figuren 2 und 3) ausgebildet, sondern setzt sich aus einer Durchgangshülse 10' und einem daran unlösbar angefügten, nämlich geschweißten Flanschelement 10" zusammen. Das Flanschelement 10" ist dabei als Drehteil ausgebildet, welches eine in die Hülse 10 hineinragende, die Durchgangsbohrung 13 verlängernde Erhöhung 14 aufweist, die wie eine Dehnhülse für die Schraube 20 wirkt.

Die eigentliche, durch das Flanschelement 10" gebildete Flanschfläche 11 ist eben. Als Verdrehsicherung sind Pins 21 vorgesehen, die jeweils in dafür vorgesehene, von der Zentralachse beabstandete Sacklöcher 15, 91 im Flanschelement 10" sowie dem Halteelement 9 eingreifen. Die Sacklöcher 15 im Flanschelement 10" können analog zur Durchgangsbohrung 13 vorgefertigt sein.

Bei den Ausführungsbeispielen in Figuren 5 und 6 ist der Auslegerarm 6 jeweils aus Stahl gefertigt. Herstellungsbedingt lassen sich bei dieser Bauart die Hülsen 10 nicht exakt gegenüber den Gelenkachsen 5 des Auslegerarms 6 positionieren. Es ist daher bevorzugt, die Hülsen 10 bzw. deren Flanschelemente 10" zunächst ohne Durchgangsbohrung 13 in dem Auslegerarm 6 zu befestigen und erst danach die Durchgangsbohrung 13 in einer gegenüber der Gelenkachse 5 genau definierten Position in die Flanschfläche 11 einzubringen. Praktisch untrügliches Zeichen, dass die Durchgangsbohrung 13 erst nachträglich in die Flanschfläche 11 eingebracht ist, ist deren nicht-zentrische Position auf der Flanschfläche 11, die aus einer gewünschten Position gegenüber der Gelenkachsen 5 bei gleichzeitiger nicht-exakter Positionierung der Hülse 10 aufgrund von Fertigungstoleranzen resultiert. Die nicht-zentrische Positionierung der Durchgangsbohrung ist in Figuren 5 und 6 unmittelbar ersichtlich.

Bei der Ausführungsform aus Figur 5 sind als Verdrehsicherung die in Zusammenhang mit Figur 4 bereits erläuterten Pins 21 vorgesehen. Da die Position der Durchgangsbohrung 13 erst nach dem Einbau der Hülse 10 in den Auslegerarm 6 feststeht, können auch die Sacklöcher 15 auf der Flanschfläche 11, in welche die Pins 21 eingreifen sollen und deren Position sich über die Position der Durchgangsbohrung 13 bestimmt, erst nach dem Einbau der Hülse 10 in das Flanschelement 10" eingebracht werden.

Die Schraube 20 ist mit einer Dehnhülse 22 versehen, um Vorspannungsverluste besser ausgleichen zu können. Darüber hinaus ist das von der Flanschfläche 11 entfernte Ende 12 der Hülse 10 mit einem Rohrdeckel 30 verschlossen, sodass der Kopf der Schraube 20 vor äußeren Einflüssen geschützt ist. Ist ein Zugang zur Schraube 20 oder zur Durchgangsbohrung 13 erforderlich, lässt sich der Rohrdeckel 30 problemlos entfernen.

Bei dem Ausführungsbeispiel in Figur 6 ist als Verdrehsicherung in der Flanschfläche 11 eine Nut 16 vorgesehen, in die ein passender Vorsprung 92 an dem Rohrhalter 9 formschlüssig eingreift. Im Übrigen gleicht dieses Ausführungsbeispiel demjenigen aus Figur 5.

Bei dem Ausführungsbeispiel aus Figur 7 weist die in einem aus Stahl gefertigten Auslegerarm 6 bereits bei dessen Herstellung integrierte Hülse 10 eine Durchgangsbohrung 13 auf, deren Innendurchmesser deutlich größer ist als der Außendurchmesser der Schraube 20. In der Folge lässt sich das Halteelement 9 grundsätzlich in unterschiedlichen Positionen an der Hülse 10 befestigen. Um das Halteelement 9 dennoch in einer definierten Position befestigen zu können, sind die Sacklöcher 15 auf der Flanschfläche nach der Fertigstellung des Auslegerarms 6 und insbesondere in einer genauen definierten relativen Position gegenüber der Gelenkachse 5 eingebracht. Über die Pins 21 wird dann nicht nur eine Verdrehsicherung des Halteelements 9, sondern gleichzeitig auch dessen korrekte Positionierung sichergestellt.

Die Dehnhülse 22 ist konisch ausgeführt, um eine Kraftübertragung zwischen der Schraube 20 und der Hülse 10 zu ermöglichen.

## Patentansprüche

1. Auslegerarm (6), insbesondere für den Verteilermast (2) einer Betonpumpe (1), mit einem ersten und einem zweiten Ende, wobei zumindest an einem Ende des Auslegerarms (6) ein Drehgelenk mit einer Gelenkachse (5) und an einer gegenüber der Gelenkachse (5) definierten Position ein aus dem Auslegerarm (6) hervorstehendes Halteelement (9) vorgesehen ist,
**dadurch gekennzeichnet, dass**
zur Befestigung des Halteelementes (9) am Auslegerarm (6) eine den Auslegerarm (6) vollständig durchdringende einseitig geschlossene Hülse (10) vorgesehen ist, deren Flanschfläche (11) eine Durchgangsbohrung (13) aufweist, an der das Halteelement (9) mit einer durch das offene Ende (12) der Hülse (10) eingeführtes Befestigungselement (20) befestigt ist.

2. Auslegerarm nach Anspruch 1,
**dadurch gekennzeichnet, dass**
die Flanschfläche (11) auf der dem Halteelement (9) zugewandten Seite zum Formschluss mit dem Haltelement (9) ausgebildet ist.

3. Auslegerarm nach einem der vorhergehenden Ansprüche,
**dadurch gekennzeichnet, dass**
die Flanschfläche (11) wenigstens eine weitere Durchgangsbohrung aufweist, durch die jeweils eine durch die das offene Ende (12) der Hülse (10) eingeführte weiteres Befestigungselement geführt ist.

4. Auslegerarm nach einem der vorhergehenden Ansprüche,
**dadurch gekennzeichnet, dass**
der Auslegerarm (6) aus Faserverbundmaterial ist, in den die einseitig geschlossene Hülse (10) als Fertigbauteil mit, vorzugsweise zentrischem, Durchgangsloch (13) integriert ist.

5. Auslegerarm nach einem der Ansprüche 1 bis 3,
**dadurch gekennzeichnet, dass**
der Auslegerarm (6) ein geschweißtes Stahlbauteil ist, in dem die einseitig geschlossene Hülse (10) befestigt wird und erst nach Befestigung der Hülse (10) im Auslegerarm (6) das Durchgangsloch (13) in einer festgelegten Position gegenüber der Gelenkachse (5) eingebracht wird.

6. Auslegerarm nach einem der vorhergehenden Ansprüche,
**dadurch gekennzeichnet, dass**
die einseitig geschlossene Hülse (10) eine Durchgangshülse (10') mit daran unlösbar angefügtem, die Flanschfläche (11) bildendem Flanschelement (10") ist, wobei das Flanschelement (10") vorzugsweise ein Drehteil ist.

7. Auslegerarm nach einem der vorhergehenden Ansprüche,
**dadurch gekennzeichnet, dass**
der Auslegerarm (6) ein Kastenprofil hat.

8. Auslegerarm nach einem der vorhergehenden Ansprüche,
**dadurch gekennzeichnet, dass**
das Halteelement (9) ein Rohrhalter ist.

9. Auslegerarm nach einem der vorhergehenden Ansprüche,
**dadurch gekennzeichnet, dass**
das von dem Flanschelement (11) entfernte Ende (12) der Hülse (10) mit einem Rohrdeckel (30) verschlossen ist.

10. Verteilermast (2) umfassend wenigstens zwei Auslegerarme (6),
**dadurch gekennzeichnet, dass**
wenigstens ein Auslegerarm (6) gemäß einem der Ansprüche 1 bis 9 ausgestaltet ist.

11. Betonpumpe (1) mit einem auf einem Unterbau (3) angeordneten Verteilermast (2) umfassend wenigstens zwei Auslegerarme (6),
**dadurch gekennzeichnet, dass**
wenigstens ein Auslegerarm (6) gemäß einem der Ansprüche 1 bis 9 ausgestaltet ist.

12. Verfahren zur Herstellung eines Auslegerarms (6) gemäß Anspruch 1, insbesondere für den Verteilermast (2) einer Betonpumpe (1), mit einem ersten und einem zweiten Ende, wobei zumindest an einem Ende des Auslegerarms (6) ein Drehgelenk mit einer Gelenkachse (5) vorgesehen ist, umfassend die Schritte:
- Einbringen einer einseitig geschlossenen Hülse (10) in den Auslegerarm (6), sodass diese den Auslegerarm (6) vollständig durchdringt; und
- Befestigen eines Halteelementes (9) an einer Durchgangsbohrung (13) an der Flanschfläche (11) der Hülse (10) mit einem durch das offene Ende (12) der Hülse (10) eingeführten Befestigungselement (20).

13. Verfahren nach Anspruch 12,
**dadurch gekennzeichnet, dass**
der Auslegerarm (6) aus Faserverbundmaterial ist und die einseitig geschlossene Hülse (10) bereits vor dem Einbringen ein, vorzugsweise zentrisches, Durchgangslochs (13) aufweist, wobei die Hülse (10) derart in den Auslegerarm (6) eingebracht wird, dass die Hülse (10) an einer gegenüber der Gelenkachse (5) definierten Position angeordnet ist.

14. Verfahren nach Anspruch 12,
**dadurch gekennzeichnet, dass**
der Auslegerarm (6) ein geschweißtes Stahlbauteil ist, in dem die einseitig geschlossene Hülse (10) befestigt wird und anschließend das Durchgangsloch (13) in einer festgelegten Position gegenüber der Gelenkachse (5) geschaffen wird und/oder die Flanschfläche (11) zum Formschluss mit dem Halteelement (9) bearbeitet wird.

15. Verfahren nach einem der Ansprüche 12 bis 14,
**dadurch gekennzeichnet, dass**
der Auslegerarm (6) zu einem Auslegerarm (6) gemäß einem der Ansprüche 2, 3, 6, 7, 8 oder 9 weitergebildet wird.

## Claims

1. Boom (6), in particular for the distributor mast (2) of a concrete pump (1), having a first end and a second end, wherein provided on at least one end of the boom (6) is a rotary joint, having a joint axis (5), and a holding element (9) which at a position defined in terms of the joint axis (5) projects from the boom (6),
**characterized in that**
provided for fastening the holding element (9) on the boom (6) is a sleeve (10) which completely penetrates the boom (6), is closed on one side, and of which the flange face (11) has a through bore (13) to which the holding element (9) is fastened by way of a fastening element (20) introduced through the open end (12) of the sleeve (10) .

2. Boom according to Claim 1,
**characterized in that**
the flange face (11) is configured on that side that for the form-fit with the holding element (9) faces the holding element (9).

3. Boom according to one of the preceding claims, **characterized in that**
the flange face (11) has at least one further through bore, a further fastening element introduced through the open end (12) of the sleeve (10) being in each case guided through said further through bore.

4. Boom according to one of the preceding claims, **characterized in that**
the boom (6) is from a fibre-composite material in which the sleeve (10), closed on one side, as a prefabricated component having a, preferably centrical, through hole (13) is integrated.

5. Boom according to one of Claims 1 to 3, **characterized in that**
the boom (6) is a welded steel component in which the sleeve (10), closed on one side, is fastened, and in which the through hole (13) is incorporated in a fixed position relative to the joint axis (5) only once the sleeve (10) has been fastened in the boom (6).

6. Boom according to one of the preceding claims, **characterized in that**
the sleeve (10), closed on one side, is a through sleeve (10') having a flange element (10'') which is non-releasably joined thereto and forms the flange face (11), wherein the flange element (10'') is preferably a turned part.

7. Boom according to one of the preceding claims, **characterized in that**
the boom (6) has a box-section profile.

8. Boom according to one of the preceding claims, **characterized in that**
the holding element (9) is a pipe retainer.

9. Boom according to one of the preceding claims, **characterized in that**
the end (12) of the sleeve (10) that is remote from the flange element (11) is closed by a pipe cap (30).

10. Distributor mast (2) comprising at least two booms (6), **characterized in that**
at least one boom (6) is designed according to one of Claims 1 to 9.

11. Concrete pump (1) having a distributor mast (2) which is disposed on a platform (3) and comprises at least two booms (6),
**characterized in that**
at least one boom (6) is designed according to one of Claims 1 to 9.

12. Method for producing a boom (6) according to Claim 1, in particular for the distributor mast (2) of a concrete pump (1), having a first end and a second end, wherein provided on at least one end of the boom (6) is a rotary joint having a joint axis (5), said method comprising the following steps:
- incorporating a sleeve (10), closed on one side, in the boom (6) such that said sleeve (10) completely penetrates the boom (6); and
- fastening a holding element (9) to a through bore (13) on the flange face (11) of the sleeve (10), by way of a fastening element (20) introduced through the open end (12) of the sleeve (10).

13. Method according to Claim 12,
**characterized in that**
the boom (6) is from a fibre-composite material, and the sleeve (10), closed on one side, already prior to being incorporated has a, preferably centrical, through hole (13), wherein the sleeve (10) is incorporated into the boom (6) in such a manner that the sleeve (10) is disposed in a position which is defined relative to the joint axis (5).

14. Method according to Claim 12,
**characterized in that**
the boom (6) is a welded steel component in which the sleeve (10), closed on one side, is fastened, and subsequently the through hole (13) is generated in a fixed position relative to the joint axis (5), and/or the flange face (11) is machined for the form-fit with the holding element (9).

15. Method according to one of Claims 12 to 14, **characterized in that**
the boom (6) is refined so as to form a boom (6) according to one of Claims 2, 3, 6, 7, 8, or 9.

## Revendications

1. Flèche (6), notamment pour un mât distributeur (2) d'une pompe à béton (1), comprenant une première et une deuxième extrémité, une articulation rotative comprenant un axe d'articulation (5) et un élément de maintien (9) faisant saillie hors de la flèche (6) au niveau d'une position définie par rapport à l'axe d'articulation (5) se trouvant au moins à une extrémité de la flèche (6),
**caractérisée en ce que**
un manchon (10) fermé d'un côté et pénétrant entièrement dans la flèche (6) étant présent pour la fixation de l'élément de maintien (9) à la flèche (6), dont la surface de bride (11) possède un orifice traversant (13) auquel l'élément de maintien (9) est fixé avec un élément de fixation (20) introduit à travers l'extrémité ouverte (12) du manchon (10).

2. Flèche selon la revendication 1, **caractérisée en ce que** la surface de bride (11) sur le côté faisant face à l'élément de maintien (9) est configurée pour la complémentarité de formes avec l'élément de maintien (9).

3. Flèche selon l'une des revendications précédentes, **caractérisée en ce que** la surface de bride (11) possède au moins un orifice traversant supplémentaire, à travers lequel est guidé un élément de fixation supplémentaire respectivement introduit à travers l'extrémité ouverte (12) du manchon (10).

4. Flèche selon l'une des revendications précédentes, **caractérisée en ce que** la flèche (6) est composée d'un matériau composite à base de fibres, dans lequel le manchon (10) fermé d'un côté est intégré en tant qu'élément préfabriqué avec un trou traversant (13) de préférence centré.

5. Flèche selon l'une des revendications 1 à 3, **caractérisée en ce que** la flèche (6) est un composant en acier soudé dans lequel le manchon (10) fermé d'un côté est fixé et le trou traversant (13) est ménagé dans une position spécifiée par rapport à l'axe d'articulation (5) seulement après la fixation du manchon (10) dans la flèche (6).

6. Flèche selon l'une des revendications précédentes, **caractérisée en ce que** le manchon (10) fermé d'un côté est un manchon traversant (10') auquel est assemblé de manière inamovible l'élément de bride (10'') formant la surface de bride (11), l'élément de bride (10'') étant de préférence une pièce tournée.

7. Flèche selon l'une des revendications précédentes, **caractérisée en ce que** la flèche (6) possède un profil en caisson.

8. Flèche selon l'une des revendications précédentes, **caractérisée en ce que** l'élément de maintien (9) est un maintien tubulaire.

9. Flèche selon l'une des revendications précédentes, **caractérisée en ce que** l'extrémité (12) du manchon (10) éloignée de l'élément bride (11) est fermée avec un couvercle tubulaire (30).

10. Mât distributeur (2) comprenant au moins deux flèches (6), **caractérisé en ce qu'**au moins une flèche (6) est configurée selon l'une des revendications 1 à 9.

11. Pompe à béton (1), comprenant un mât distributeur (2) disposé sur une base (3) et comportant au moins deux flèches (6), **caractérisée en ce qu'**au moins une flèche (6) est configurée selon l'une des revendications 1 à 9.

12. Procédé de fabrication d'une flèche (6) selon la revendication 1, pour un mât distributeur (2) d'une pompe à béton (1), comprenant une première et une deuxième extrémité, une articulation rotative comprenant un axe d'articulation (5) se trouvant au moins à une extrémité de la flèche (6), comprenant les étapes suivantes :
- introduction d'un manchon (10) fermé d'un côté dans la flèche de manière à ce que celui-ci pénètre entièrement dans la flèche (6) ; et
- fixation d'un élément de maintien (9) à un orifice traversant (13) au niveau de la surface de bride (11) du manchon (10) avec un élément de fixation (20) introduit à travers l'extrémité ouverte (12) du manchon (10).

13. Procédé selon la revendication 12, **caractérisé en ce que** la flèche (6) est composée de matériau composite à base de fibres et le manchon (10) fermé d'un côté possède, déjà avant l'introduction, un trou traversant (13) de préférence centré, le manchon (10) étant introduit dans la flèche (6) de telle sorte que le manchon (1) est disposé à une position définie par rapport à l'axe d'articulation (5).

14. Procédé selon la revendication 12, **caractérisé en ce que** la flèche (6) est un composant en acier soudé dans lequel le manchon (10) fermé d'un côté est fixé et le trou traversant (13) est ensuite réalisé dans une position spécifiée par rapport à l'axe d'articulation (5) et/ou la surface de bride (11) est usinée pour la complémentarité de formes avec l'élément de maintien (9).

15. Procédé selon l'une des revendications 12 à 14, **caractérisé en ce que** la flèche (6) est perfectionnée en une flèche (6) selon l'une des revendications 2, 3, 6, 7, 8 ou 9.
